**Europäisches Patentamt**

**European Patent Office**

**Office européen des brevets**

(19)

(11) Veröffentlichungsnummer: **0 258 743 B1**

(12) **EUROPÄISCHE PATENTSCHRIFT**

(45) Veröffentlichungstag der Patentschrift: **23.10.91**

(21) Anmeldenummer: 87112069.7

(22) Anmeldetag: 20.08.87

(51) Int. Cl.5: **B01D 53/34, B01D 53/36, C01B 17/74, C01B 17/775**

(54) **Verfahren zur Reinigung von Abgasen.**

(30) Priorität: 02.09.86 DE 3629765

(43) Veröffentlichungstag der Anmeldung:
09.03.88 Patentblatt 88/10

(45) Bekanntmachung des Hinweises auf die
Patenterteilung:
23.10.91 Patentblatt 91/43

(84) Benannte Vertragsstaaten:
**AT BE DE FR GB IT NL**

(56) Entgegenhaltungen:
**EP-A- 0 177 806**
**DE-A- 2 137 847**
**FR-A- 2 238 669**
**GB-A- 744 465**

(73) Patentinhaber: **BAYER AG**

**W-5090 Leverkusen 1 Bayerwerk(DE)**

(72) Erfinder: **Lailach, Günter, Dr.**
**Bodelschwinghstrasse 23**
**W-4150 Krefeld(DE)**
Erfinder: **Gerken, Rudolf, Dr.**
**Ratherstrasse 79**
**W-4150 Krefeld(DE)**

**Beschreibung**

Abgase, wie sie beispielsweise bei Calzinierprozessen oder bei Schlammverbrennungen anfallen, enthalten häufig relativ viel Staub, $SO_2$, HCl, HF und Quecksilber. Durch eine Wäsche dieser Abgase mit Wasser oder alkalischen Waschlösungen werden die in den Abgasen vorhandenen obengenannten mitgeführten Stoffe häufig nur aus der Abluft in das Abwasser oder zur Deponie umgeleitet. Das Ziel einer Abgasbehandlung sollte jedoch sein, die mitgeführten Stoffe in wiederverwendbare Produkte zu überführen.

Ein Verfahren zur Reinigung von Rauchgasen, die diese Verunreinigungen prinzipiell auch enthalten, wird in EP-A 177 806 vorgeschlagen. Bei diesem Verfahren wird das $SO_2$ durch katalytische Oxidation an feuchter Aktivkohle zu 3 bis 20 %iger Schwefelsäure umgesetzt, die in 2 Stufen im Gegenstrom zum Rauchgas auf eine Konzentration von 60 bis 85 % $H_2SO_4$ eingedampft wird, wobei gleichzeitig eine Entfernung von HCl und HF erfolgt. Dieses Verfahren ist jedoch nicht mehr anwendbar, wenn der Wasserdampfpartialdruck der Abgase über etwa 15 Vol-% liegt, weil dann die für eine wirtschaftliche Verwendung der gebildeten Schwefelsäure erforderliche Konzentration von mindestens 60 % unter Ausnutzung der Abgaswärme nicht mehr erreichbar ist.

Die Aufgabe der vorliegenden Erfindung ist die Bereitstellung eines Verfahrens, nach dem auch Abgase mit Wasserdampfpartialdrucken von mehr als 15 Vol-% gereinigt werden können.

Gegenstand der vorliegenden Erfindung ist ein Verfahren zur Reinigung von Staub, Schwefeldioxid und/oder Chlor- und Fluorwasserstoff enthaltenden Abgasen mit einer Temperatur von 170 bis 500° C und mit einem Wasserdampfpartialdruck von mindestens 15 Vol-%, wobei

a) die Abgase (1) in einer Wäsche (2) mit 60 bis 75 %iger Schwefelsäure auf Temperaturen unterhalb 135° C abgekühlt werden, wobei diese so aufgeheizte 60 - 75 %ige Schwefelsäure in einem indirekten Wärmetauscher (20) gekühlt wird und in die Wäsche (2) zurückgeführt wird,

b) die Abgase aus a) in einer Wäsche (7) mit 5 bis 20 %iger Schwefelsäure auf 60 bis 80° C abgekühlt werden,

c) die Abgase aus b) an feuchter Aktivkohle (9) unter Bildung von Schwefelsäure entschwefelt werden,

d) die in c) gebildete Schwefelsäure in der Wäsche (7) im Schritt b) in Kontakt mit den heißen Abgasen auf eine Schwefelsäurekonzentration von 5 bis 20 % $H_2SO_4$-Gehalt gebracht wird,

e) die in d) gebildete 5 bis 20 %ige Schwefelsäure auf eine Konzentration von 60 bis 80 % $H_2SO_4$-Gehalt eingedampft wird unter Ausnutzung von Wärmeenergie, die bei der Kühlung der Abgase in a) abgeführt wird,

f) vor dem Schritt e) HCl und/oder aus einem Gemisch der 5 bis 20 %igen $H_2SO_4$ aus d) mit 60 bis 80 %iger Schwefelsäure entfernt wird,

g) die in a) abgeführte Wärmeenergie von der 60 bis 75 %igen Schwefelsäure der Wäsche im Wärmetauscher (20) an die in e) auf 60 bis 80 % $H_2SO_4$-Gehalt eingedampfte Schwefelsäure übertragen wird und

h) 60-80 %ige $H_2SO_4$ als Produkt aus Stufe e) abgezogen wird

Es ist besonders vorteilhaft, aus den in der Stufe a) abgekühlten Abgasen Tropfen feststoffhaltiger Schwefelsäure möglichst vollständig abzuscheiden. Dies kann in bekannten Tropfenabscheidern erfolgen. Anschließend werden diese feststofffreien Rauchgase erfindungsgemäß in einem ersten Konzentrierer gemäß dem Teilschritt b) gekühlt und dabei weitgehend HCl- und HF-frei gewaschen. Diese vorgereinigten Abgase werden dann im Teilschritt c) durch eine feuchte Aktivkohleschicht geleitet, in der $SO_2$ zu Schwefelsäure umgesetzt wird, die zusammen mit dem restlichen HCl und HF als maximal 15 %ige Lösung durch Besprühen der Kohle mit Wasser aus dieser ausgewaschen wird. Die aus der Aktivkohleschicht abfließende Schwefelsäure wird dann vorteilhaft im obengenannten ersten Konzentrierer gemäß dem Teilschritt d) auf einen Schwefelsäuregehalt von 5 bis 20 % eingedampft. Diese HCl-und HF-haltige Schwefelsäure wird aus dem Konzentrierer abgezogen und mit so viel 60 bin 80 %iger Schwefelsäure aus dem Konzentrierer II gemischt, daß eine 50 bis 70 % $H_2SO_4$ enthaltende Mischung resultiert, aus der HCl und HF durch Strippen entfernt werden können.

Die aus dem Stripper abfließende Schwefelsäure kann dann vorteilhaft in einem weiteren Konzentrierer auf eine Schwefelsäurekonzentration von 60 bis 80 % eingedampft werden.

Die Kühlung der Abgase in der Abgaswäsche erfolgt dadurch, daß die im Verfahrensschritt a) abgeführte Wärmeenergie von der 60 bis 75 %igen Schwefelsäure dieser Wäsche in Wärmetauschern an die im Schritt e) gebildete auf 60 bis 80 % $H_2SO_4$-Gehalt eingedampfte Schwefelsäure übertragen wird.

Vorzugsweise erfolgt die Abkühlung der Abgase im Verfahrensschritt a) auf Temperaturen im Bereich von 100 bis 130° C. Die in der Abgaswäsche abgeschiedenen Feststoffe können aus einem Teilstrom der im Kreislauf geförderten Schwefelsäure abgetrennt werden, HCl und HF aus den aus dem Stripper austretenden Gasen in einem Absorber mit einem gekühlten Salzsäure-Flußsäure-Gemisch ausgewaschen werden.

Für die Ausführung der einzelnen Verfahrensstufen sind nach dem Stand der Technik verschiedene Möglichkeiten gegeben. Für die Wäsche der staubhaltigen Gase werden Venturi-Wäscher, Strahlwäscher oder Waschtürme mit Düsenrosten bevorzugt, weil diese keine Probleme durch Ablagerung von Feststoffen verursachen. Für eine effektive Abscheidung der feststoffhaltigen Säuretropfen werden Lamellenabscheider bevorzugt.

Für den ersten Konzentrierer können die obengenannten Gaswäscher oder Füllkörpertürme zur Anwendung kommen. Die katalytische SO$_2$-Entfernung erfolgt nach dem Stand der Technik (EP-A-177 806). Die Eindampfung der Schwefelsäure auf eine Konzentration von 60 bis 80 % wird bevorzugt in Vakuumzwangsumlaufverdampfern vorgenommen. Diese sind vorzugsweise 1-stufig und werden bei 80 bis 120°C und 30 bis 100 mbar betrieben, wobei die Brüdenkondensation durch direkte oder indirekte Kühlung erfolgen kann.

Eine weitere bevorzugte Ausführungsform des erfindungsgemäßen Verfahrens besteht darin, daß die Eindampfung der Schwefelsäure in Verdunstungskühlern vorgenommen wird. Hierbei wird das zu verdampfende Wasser durch Kontakt der im Kreislauf geförderten heißen Säure vorzugsweise mit Luft abgetrieben. Als Konzentrierer kommen hier ebenfalls Venturi- oder Strahlwäscher sowie Waschtürme in Frage. Die dabei auf 80 bis 120°C erwärmte relativ große Luftmenge kann als vorgewärmte Verbrennungsluft zu der das Abgas erzeugenden Verbrennungseinrichtung zurückgeleitet werden.

Eine bevorzugte Ausführungsform des erfindungsgemäßen Verfahrens besteht somit darin, daß die im Verdunstungskühler erwärmte Luft bei der abgaserzeugenden Verbrennung eingesetzt wird.

Als Zwangsanfallprodukte bei der Abgasreinigung nach dem erfindungsgemäßen Verfahren fallen demnach an:
Staub, der in feuchter Form deponiert oder wieder in die Verbrennung zurückgeführt werden kann, 60 bis 80 %ige Schwefelsäure, die aufgrund ihrer Reinheit vielseitig verwendet werden kann. Ein ca. 20 %iges Gemisch von Salzsäure und Flußsäure, für das Verwendungsmöglichkeiten beispielsweise in Beizlösungen für Edelstähle bestehen.

Bei höheren Quecksilbergehalten in den Abgasen kann sich die Notwendigkeit ergeben, dieses aus der Schwefelsäure abzutrennen, wofür bekannte Verfahren verfügbar sind.

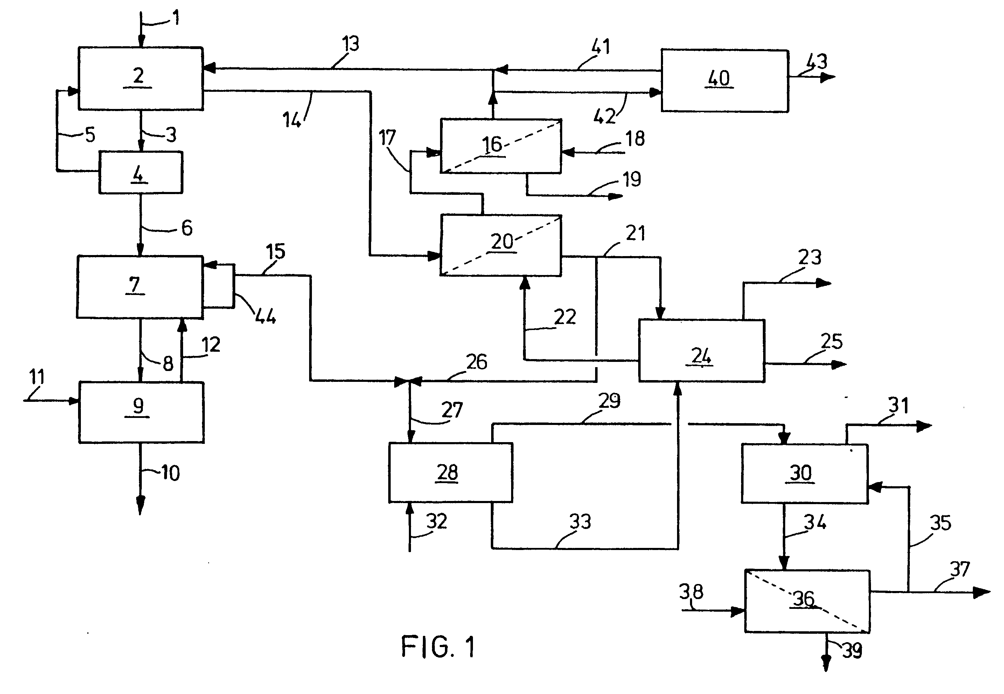

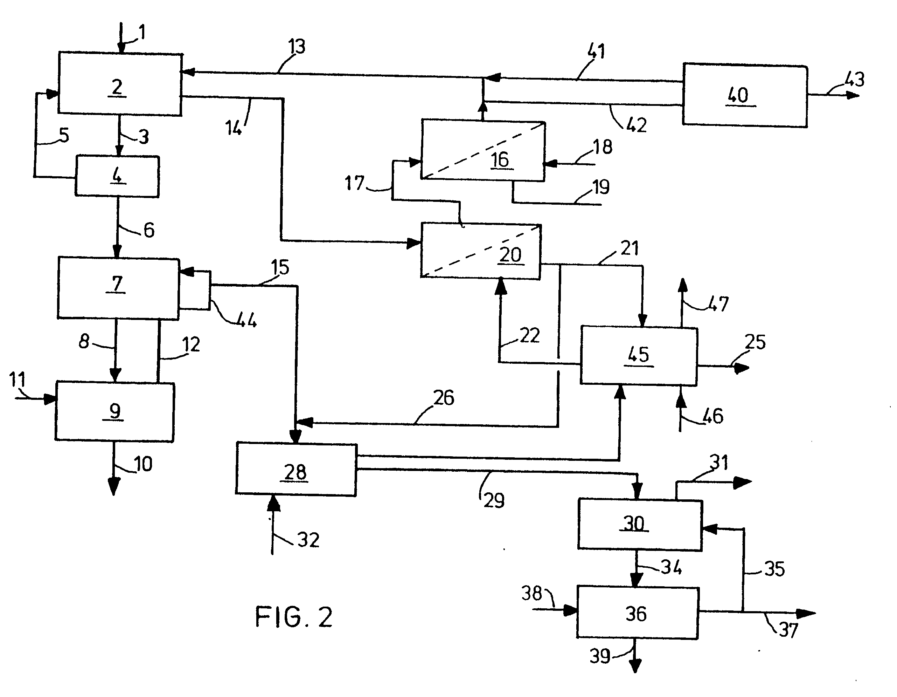

Das erfindungsgemäße Verfahren soll anhand der Fig. 1 und 2 näher erläutert werden.

Gemäß Fig. 1 werden die 170 bis 500°C heißen Abgase (1), die mehr als 15 Vol-% H$_2$O enthalten, in einem Wäscher (2) mit 60 bis 75 %iger Schwefelsäure, die Feststoffe und gelöste Sulfate enthält, staubfrei gewaschen. Die aus dem Wäscher (2) abfließende Schwefelsäure (14) hat eine Temperatur von 100 bis 140°C. Sie wird in einem oder mehreren Wärmetauschern (20) mit 60 bis 80 %iger Schwefelsäure (22) als Kühlmedium gekühlt. Aus der gekühlten Schwefelsäure (17) wird anschließend in einem oder mehreren Wärmetauschern (16) mittels Kühlwasser (18, 19) noch so viel Wärmeenergie abgeführt, daß die Abgase im Wäscher (2) durch die gekühlte Kreislaufsäure (13) auf eine Temperatur im Bereich 100 bis 130°C abgekühlt werden. Aus dem gekühlten und staubfrei gewaschenen Abgasstrom (3) werden in einem Tropfenabscheider (4) Säuretropfen entfernt. Die abgeschiedene Säure (5) fließt in den Wäscher (2) zurück.

Die gekühlten und staubfrei gewaschenen Abgase (6) werden im Konzentrierer I (7) mit 5 bis 20 %iger Schwefelsäure (44) in Kontakt gebracht. Dabei kühlen sich die Abgase infolge Wasserverdampfung aus der Schwefelsäure auf 60 bis 80°C ab. Außerdem werden in den Abgasen enthaltenes HCl und HF weitgehend in der Schwefelsäure gelöst. Die vorgereinigten Abgase (8) werden in einem Festbettreaktor (9) durch eine Schicht feuchter Aktivkohle geleitet, in der das SO$_2$ zu Schwefelsäure umgesetzt wird. Die gereinigten Abgase (10) werden in die Atmosphäre oder zu einer Wiederaufheizung abgegeben. Die in der Aktivkohleschicht gebildete Schwefelsäure wird durch Besprühen der Schicht mit Wasser (11) als maximal 15 %ige Schwefelsäure, die außerdem geringe Mengen HCl und HF enthält, aus der Kohle ausgewaschen und in den Konzentrierer I (7) eingeleitet (12), in dem eine Konzentrierung auf 5-20 % H$_2$SO$_4$-Gehalt erfolgt. Entsprechend der Schwefelsäureeinspeisung (12) wird 5 bis 20 %ige HCl und HF enthaltende Schwefelsäure (15) aus dem Konzentrierer I (7) ausgespeist. Die Schwefelsäure (5) wird mit so viel 60 bis 80 %iger Schwefelsäure (26) aus dem Kreislaufsystem des Konzentrierers II (24) gemischt, daß einen Mischung mit 50 bis 70 % H$_2$SO$_4$-Gehalt resultiert (27). Diese Mischung wird in einen Stripper (28) eingespeist, in dem HCl und HF mittels Gas (32) aus der Säure ausgeblasen werden. Als Gas (32) kann Luft oder vorzugsweise ein Teilstrom der vorgereinigten Abgase verwendet werden.

Die HCl- und HF-freie Schwefelsäure (33) fließt aus dem Stripper (28) in den Konzentrierer II (24). Der Konzentrierer II (24) ist ein Vakuumzwangsumlaufverdampfer. Die im Kreislauf geförderte Schwefelsäure wird im Wärmetauscher (20) von 80 bis 120°C (22) auf 90 bis 125°C (21) aufgeheizt, wobei die Kreislaufsäure (14) des Wäschers (2) als Heizmedium dient. Im Vakuumverdampfer (24) erfolgt bei 30 bis 100 mbar die Konzentrierung der Schwefelsäure auf 60 bis 80 % H$_2$SO$_4$. Mit dieser Konzentration wird die gesamte bei der Entschwefelung gebildete Schwefelsäure als reine Säure (25) aus dem System ausgespeist. Die bei der Verdampfung anfallenden Brüden (23) werden auf die übliche Weise in Einspritzkondensatoren oder indirekt gekühlten Kondensatoren kondensiert.

Die HCl und HF enthaltenden Gase (29) aus dem Stripper (28) werden in einen Absorber (30) geleitet, in dem durch Wäsche mit einem kalten Salzsäure-Flußsäure-Gemisch (35) HCl und HF weitgehend aus dem Gas entfernt werden, bevor dieses (31) vorzugsweise vor dem Konzentrierer I (7) in den Abgasstrom eingeleitet wird.

Die aus dem Absorber (30) abfließende Säure (34) wird im Wärmetauscher (36) mit Kühlwasser (38, 39) gekühlt. Als Zwangsanfall (37) wird eine ca. 20 % HCl enthaltende Säure abgezogen, deren HF-Gehalt von der Abgaszusammensetzung (1) abhängt.

Aus dem Säurekreislauf des Wäschers (2) wird kontinuierlich oder diskontinuierlich ein Teilstrom (42) abgezogen, aus dem in einem geeigneten Aggregat, z.B. einem Filter, (40), die im Wäscher (2) aus den Abgasen abgetrennten Feststoffe (43) aus der Säure entfernt werden. Die feststofffreie Säure wird in den Wäscher (2) zurückgeführt.

Die Verfahrensvariante gemäß Fig. 2 unterscheidet sich von derjenigen gemäß Fig. 1 durch die Art der Schwefelsäurekonzentrierung auf 60 bis 80 % $H_2SO_4$-Gehalt. Statt des Vakuumzwangsumlaufverdampfers (24) wird ein Verdunstungskühler (45) eingesetzt. Als Verdunstungskühler können Kühltürme, Füllkörpertürme, Venturiwäscher, Strahlwäscher oder andere Apparate zum Einsatz kommen, in denen aus der aufgeheizten Schwefelsäure (21) durch Kontakt mit Luft (46) Wasser verdampft wird. Die auf Temperaturen im Bereich von 90 bis 120 °C aufgeheizte Abluft (47) kann vorteilhaft als vorgeheizte Luft bei der Verbrennung eingesetzt werden.

Diese Vorteile des erfindungsgemäßen Verfahrens sollen durch die Auslegungsbeispiele verdeutlicht werden, ohne daß hierin eine Einschränkung der Erfindung zu sehen ist.

Beispiel 1

Bei einer Schlammverbrennung fallen 100.000 $m^3$/h Abgas einer Temperatur von 250 °C und folgender Zusammensetzung an:
25,5 Vol.-% $H_2O$; 7,4 Vol.-% $O_2$; 7,7 Vol.-% $CO_2$; 59,2 Vol.-% $N_2$, 2200 mg $SO_2$/$m^3$, 150 mg HCl/$m^3$, 125 mg HF/$m^3$, 600 mg Staub/$m^3$
(Alle Volumenangaben beziehen sich auf feuchtes Gas unter Standardbedingungen).

Das Abgas wird in einer Anlage gemäß Fig. 1 gereinigt. Das Abgas (1) wird in einem Venturiwäscher (2) mit 245 t/h 70 %iger Schwefelsäure (13) gekühlt und gewaschen. Die Schwefelsäure enthält etwa 1 Gew.-% Feststoffe und hat eine Temperatur von 90 °C. Das aus dem Wäscher (2) austretende Abgas (3) hat eine Feuchte von 25,5 Vol.-%, eine Temperatur von 125 °C, ist staubfrei und enthält Tröpfchen feststoffhaltiger 70 %iger Schwefelsäure. Beim Durchströmen eines Lamellenabscheiders (4) werden die Tröpfchen abgeschieden. Die abgeschiedene verunreinigte Schwefelsäure (5) fließt in den Wäscher (2) zurück.

Aus dem Wäscher (2) wird die feststoffhaltige Schwefelsäure mit einer Temperatur von 125 °C abgezogen (14) und in hintereinandergeschalteten Wärmetauschern (20, 16) zuerst mit 70 %iger reiner Schwefelsäure (22) auf 112 °C (17) und danach mit Kühlwasser (18, 19) auf 90 °C gekühlt. Im Wärmetauscher (16) werden maximal 180 $m^3$/h Kühlwasser von 25 °C (18) auf 40 °C (19) erwärmt.

6,2 t/h der gekühlten feststoffhaltigen Schwefelsäure (42) werden filtriert (40) und als feststofffreie Säure (41) wieder in den Säurekreislauf zurückgeleitet. Aus dem Filter (40) wird der Filterkuchen (43) mit 60 kg/h Trockensubstanz entnommen und vorteilhaft in die Schlammverbrennung zurückgegeben. Das gekühlte, feststofffreie Abgas (6) wird in einem Konzentrierer I (7) mit 10,45 %iger Schwefelsäure (44) in Kontakt gebracht. Dabei kühlt sich das Abgas von 125 °C (6) auf 69 °C (8) ab unter gleichzeitiger Erhöhung des Wasserdampfgehaltes auf 28,5 Vol-% infolge Wasserverdampfung aus der Schwefelsäure. Außerdem werden HCl und HF weitgehend aus dem Abgas ausgewaschen und in der Schwefelsäure gelöst.

Das vorgereinigte Abgas (8) wird durch einen Aktivkohlefestbettreaktor (9) geleitet. An der feuchten Aktivkohle wird das $SO_2$ zu Schwefelsäure umgesetzt. HCl und HF werden in der verdünnten Schwefelsäure gelöst. Das gereinigte Abgas (10) ist bei 69 °C wasserdampfgesättigt, enthält 61 mg $SO_2$/$m^3$, 4 mg HCl/$m^3$ und 5 mg HF/$m^3$.

Die im Reaktor (9) gebildete Säure wird durch Besprühen der Aktivkohle mit 6,3 t/h $H_2O$ als verdünnte Schwefelsaure (12) ausgewaschen (6,52 t/h), die außer 5 Gew.-% $H_2SO_4$ noch geringe Mengen HCl und HF enthält, und in den Konzentrierer I (7) eingespeist, in den die Konzentrierung auf 10,45 % $H_2SO_4$-Gehalt erfolgt. Aus dem Kreislaufsystem des Konzentrierers I (7) werden 3,12 t/h Säure ausgespeist (15), die 10,45 % $H_2SO_4$, 0,48 % HCl und 0,40 % HF enthalten. Dieses Säuregemisch wird mit 6 t/h 70 %iger 110 °C heißer Schwefelsäure (26) gemischt. Die resultierende Säuremischung (27) wird in den Stripper (28) eingespeist. Als Strippergas werden 300 $m^3$/h gereinigtes Abgas (10) verwendet. Das im Stripper (28) mit HCl und HF beladene Gas (29) wird im Waschturm (30) mit 40 °C warmer Säure (33) gewaschen. Dabei kondensieren 80 kg/h Wasser. Die Lösung absorbiert 14,6 kg/h HCl und 12,0 kg/h HF. Die mit 50 °C aus dem Waschturm (30) abfließende Säure (34) wird im Wärmetauscher (36) mittels Kühlwasser (38, 39) aus 40 °C gekühlt. Aus dem Kreislauf werden 106,6 kg/h Säure eingespeist (37), die 13,7 % HCl und 11,3 % HF enthält.

Die im Stripper (28) von HCl und HF befreite Schwefelsäure (33) wird in einen Vakuumzwangsumlaufverdampfer (24) eingespeist. In diesem System der Konzentrierung II werden 700 m³/h 76 %ige Schwefelsäure im Kreislauf gefördert durch den Wärmetauscher (20), in dem eine Erwärmung von 107 auf 110 °C erfolgt und den Verdampfer (24), in dem bei 50 mbar die Verdampfung von 2,7 t/h Wasser und die Abkühlung der Säure von 110 auf 107 °C erfolgt. Die Brüden und Leckageluft (23) werden zum Kondensator abgezogen. Aus dem Verdampfer werden 0,429 t/h reine 76 %ige Schwefelsäure (25) ausgespeist.

Beispiel 2

Entspricht Beispiel 1, mit dem Unterschied, daß als Konzentrierer II ein Verdunstungskühler eingesetzt wird (entsprechend Fig. 2).

In diesem Fall wird die feststoffhaltige Schwefelsäure des Wäscherkreislaufs (14) im Wärmetauscher (20) von 125 auf 97 °C abgekühlt, wobei die 70 %ige reine Schwefelsäure (22) des Konzentrierers II (45) als Kühlmedium dient. Zur weiteren Kühlung der Säure (17) auf 90 °C im zweiten Wärmetauscher (16) sind in diesem Fall nur 54 m³/h Kühlwasser erforderlich, wenn dieses von 25 °C (18) auf 40 °C (19) erwärmt wird.

Aus der im Wärmetauscher (20) auf 110 °C erwärmten reinen 70 %igen Schwefelsäure (21) werden im Kühlturm (45) 2,65 t/h Wasser verdampft, indem 74 000 m³/h (i.N.) Luft (46) durch die herabfließende Schwefelsäure geblasen werden. Die dabei von 25 °C auf 100 °C erwärmte Luft kann als vorgewärmte Verbrennungsluft bei der Schlammverbrennung benutzt werden, wodurch sich eine Energieeinsparung von 8 GJ/h ergibt.

**Patentansprüche**

1. Verfahren zur Reinigung von Staub, Schwefeldioxid und/oder Halogenwasserstoffe enthaltenden Abgasen (1) mit einer Temperatur von 170 bis 500 °C und mit einem Wasserdampfpartialdruck von mindestens 15 Vol-%, wobei

   a) die Abgase (1) in einer Wäsche (2) mit 60 bis 75 %iger Schwefelsäure auf Temperaturen unterhalb 135 °C abgekühlt werden, wobei diese so aufgeheizte 60 - 75 %ige H₂SO₄ in einem indirekten Wärmetauscher (20) gekühlt wird und in die Wäsche (2) zurückgeführt wird,

   b) die Abgase (3;6) aus a) in einer Wäsche (7) mit 5 bis 20 %iger Schwefelsäure (44) auf 60 bis 80 °C abgekühlt werden,

   c) die Abgase (8) aus b) an feuchter Aktivkohle (9) unter Bildung von Schwefelsäure (12) entschwefelt werden,

   d) die in c) gebildete Schwefelsäure (12) in der Wäsche (7) im Schritt b) in Kontakt mit den heißen Abgasen (3;6) auf eine Schwefelsäurekonzentration von 5 bis 20 % H₂SO₄-Gehalt gebracht wird,

   e) die in d) gebildete 5 bis 20 %ige Schwefelsäure (15) auf eine Konzentration von 60 bis 80 % H₂SO₄-Gehalt eingedampft wird unter Ausnutzung von Wärmeenergie, die bei der Kühlung der Abgase (1) in a) abgeführt wird,

   f) vor dem Schritt e) HCl und/oder aus einem Gemisch (27) der 5 bis 20 %igen H₂SO₄ (15) aus d) mit 60 bis 80 %iger Schwefelsäure (26) entfernt wird,

   g) die in a) abzuführende Wärmeenergie von der 60 bis 75 %igen Schwefelsäure (14) der Wäsche (2) im Wärmetauscher (20) an die in e) auf 60 bis 80 % H₂SO₄-Gehalt eingedampfte Schwefelsäure (22) übertragen wird und

   h) 60-80 %ige H₂SO₄ als Produkt aus Stufe e) abgezogen wird.

2. Verfahren gemäß Anspruch 1, dadurch gekennzeichnet, daß die Abkühlung der Abgase (1) in 1a) auf Temperaturen im Bereich von 100 bis 130 °C erfolgt.

3. Verfahren gemäß einem der Ansprüche 1 oder 2, dadurch gekennzeichnet, daß die Eindampfung der Schwefelsäure in 1e) in Vakuumzwangsumlaufverdampfern (24) vorgenommen wird.

4. Verfahen gemäß einem der Ansprüche 1 oder 2, dadurch gekennzeichnet, daß die Eindampfung der Schwefelsäure in 1e) in Verdunstungskühlern (45) vorgenommen wird.

5. Verfahren gemäß Anspruch 4, dadurch gekennzeichnet, daß Luft (46) zum Abtreiben des Wasserdampfes verwendet wird.

6. Verfahren gemäß Anspruch 5, dadurch gekennzeichnet, daß die im Verdunstungskühler erwärmte Luft (47) bei der abgaserzeugenden Verbrennung eingesetzt wird.

**Claims**

1. A process for the purification of waste gases (1) containing dust, sulfur dioxide and/or halogenated hydrocarbons and having a temperature of 170 to 500°C and a steam partial pressure of at least 15% by volume, in which

a) the waste gases (1) are cooled to temperatures below 135°C in a wash (2) with 60 to 75% sulfuric acid, the 60 to 75% $H_2SO_4$ thus heated being cooled in an indirect heat exchanger (20) and returned to the wash (2),

b) the waste gases (3;6) from a) are cooled to 60 to 80°C in a wash (7) with 5 to 20% sulfuric acid (44),

c) the waste gases (8) from b) are desulfurized on moist active carbon (9) with formation of sulfuric acid (12),

d) the sulfuric acid (12) formed in c) is brought to a sulfuric acid concentration of 5 to 20% $H_2SO_4$ in the wash (7) of step b) in contact with the hot waste gases (6),

e) the 5 to 20% sulfuric acid (15) formed in d) is concentrated by evaporation to a concentration of 60 to 80% $H_2SO_4$ utilizing heat which is dissipated during cooling of the waste gases (1) in a),

f) before step e), HCl and/or HF is removed from a mixture (27) of the 5 to 20% $H_2SO_4$ (15) from d) with 60 to 80% sulfuric acid (26),

g) the heat from the 60 to 75% sulfuric acid (14) of the wash (2) which is to be dissipated in a) is transferred in the heat exchanger (20) to the sulfuric acid (22) to be concentrated by evaporation in e) to an $H_2SO_4$ content of 60 to 80% and

h) 60 to 80% $H_2SO_4$ is removed as the product from step e).

2. A process as claimed in claim 1, characterized in that the waste gases are cooled to temperatures of 100 to 130°C in 1a).

3. A process as claimed in claim 1 or 2, characterized in that the sulfuric acid is concentrated by evaporation in forced circulation evaporators (24) in 1e).

4. A process as claimed in claim 1 or 2, characterized in that the sulfuric acid is concentrated by evaporation in evaporation coolers (45) in 1e).

5. A process as claimed in claim 4, characterized in that air (46) is used to drive off the steam.

6. A process as claimed in claim 5, characterized in that the air (47) heated in the evaporation cooler is used in the combustion process producing the waste gases.

## Revendications

1. Procédé d'épuration de gaz de combustion (1) contenant des poussières, du dioxyde de soufre et/ou des hydracides halogénés, d'une température de 170 à 500 °C et d'une pression partielle de vapeur d'eau d'au moins 15 % en vol., dans lequel

a) les gaz de combustion (1) sont refroidis dans un bain de lavage (2) avec un acide sulfurique à 60 à 75 %, à des températures inférieures à 135 °C, l'acide sulfurique à 60 à 75 % ainsi chauffé étant refroidi dans un échangeur de chaleur (20) indirect et ramené dans le bain de lavage (2),

b) les gaz de combustion (3, 6) de l'étape a) sont refroidis à une température de 60 à 80 °C dans un bain de lavage (7) avec de l'acide sulfurique (44) à 5 à 20 %,

c) les gaz de combustion (8) de l'étape b) sont désulfurés sur du charbon actif humide (9) avec formation d'acide sulfurique (12),

d) l'acide sulfurique (12) formé en c) dans le bain de lavage (7) de l'étape b) est mis en contact avec les gaz de combustion (3, 6) chauds jusqu'à une concentration d'acide sulfurique à 5 à 20 %,

e) l'acide sulfurique (15) à 5 à 20 % formé en d) est concentré par évaporation jusqu'à une concentration de 60 à 80 % en exploitant l'énergie calorifique qui est dégagée lors du refroidissement des gaz de combustion (1) en a),

f) avant l'étape e), le HCl et/ou le HF sont éliminés d'un mélange (27) d'$H_2SO_4$ (15) à 5 à 20 % de d) avec de l'acide sulfurique (26) à 60 à 80 %,

g) l'énergie calorifique dégagée en a) de l'acide sulfurique (14) à 60 à 75 % du bain de lavage (2) dans l'échangeur de chaleur (20) est transmise à l'acide sulfurique (22) concentré par évaporation en e) jusqu'à une teneur de 60 à 80 % et

h) l'$H_2 2O_4$ à 60 à 80 % est évacué comme produit issu de l'étape e).

2. Procédé selon la revendication 1, caractérisé en ce que le refroidissement des gaz de combustion (1) s'effectue en 1a) à des températures de l'ordre de 100 à 130 °C.

3. Procédé selon une des revendications 1 ou 2, caractérisé en ce que l'évaporation de l'acide sulfurique en 1e) est accomplie dans des évaporateurs à circulation forcée sous vide (24).

4. Procédé selon une des revendications 1 ou 2, caractérisé en ce que l'évaporation de l'acide sulfurique en 1e) est accomplie dans des refroidisseurs à évaporation (45).

5. Procédé selon la revendication 4, caractérisé en ce que l'air (46) est utilisé pour chasser la vapeur d'eau.

6. Procédé selon la revendication 5, caractérisé en ce que l'air (47) chauffé dans le refroidisseur à évaporation est utilisé lors de l'incinération productrice de gaz de combustion.

FIG. 1

FIG. 2

EP 0 258 743 B1